# EUROPEAN PATENT APPLICATION

(11) **EP 4 703 146 A1**
(43) Date of publication of application: **04.03.2026**
(21) Application number: 24796117.0
(22) Date of filing: 24.04.2024
(51) Int. Cl.: B60B 27/00, B60C 23/00

(54) **WHEEL-SIDE INFLATION AND DEFLATION DEVICE, ACTIVE TIRE PRESSURE INFLATION AND DEFLATION SYSTEM, AND VEHICLE**

(30) Priority: 28.04.2023 CN 202310487368
(71) Applicant: BYD Company Limited, Shenzhen, Guangdong 518118 (CN)
(72) Inventor: LUO, Zhongliang, Shenzhen, Guangdong 518118 (CN); WANG, Ping, Shenzhen, Guangdong 518118 (CN); DENG, Anpei, Shenzhen, Guangdong 518118 (CN); WU, Sheng, Shenzhen, Guangdong 518118 (CN); HE, Yuanbao, Shenzhen, Guangdong 518118 (CN)
(74) Representative: Mathys & Squire
(86) International application number: PCT/CN2024/089575
(87) International publication number: WO 2024/222741

(57) **Abstract**

Provided are a wheel-side inflation/deflation apparatus (100), an active tire pressure inflation/deflation system (200), and a vehicle (1000). The wheel-side inflation/deflation apparatus (100) includes an annular member (10) and a rotation unit (20) that is sleeved on the annular member (10) and is rotatable relative to the annular member (10). The annular member (10) is sleeved on a hub bearing (51) and is connected to an outer ring (511) of the hub bearing (51). A first air path (11) connected to an air source (201) is formed in the annular member (10). A rotary air chamber (21) and a second air path (22) are formed in the rotation unit (20). The rotary air chamber (21) communicates with a first air path (11) and a second air path (22). The second air path (22) is connected to a tire (71).

## Description

### CROSS-REFERENCE TO RELATED APPLICATIONS

This application is based on Chinese Patent Application No. 202310487368.4, filed on April 28, 2023 and entitled "WHEEL-SIDE INFLATION/DEFLATION APPARATUS, ACTIVE TIRE PRESSURE INFLATION/DEFLATION SYSTEM, AND VEHICLE", and claims priority to the Chinese Patent Application, which is incorporated herein by reference in its entirety.

### TECHNICAL FIELD

This application belongs to the field of vehicle manufacturing technologies, and in particular, to a wheel-side inflation/deflation apparatus, an active tire pressure inflation/deflation system, and a vehicle.

### BACKGROUND

In the related art, in order to reduce tire wear and driving resistance, some vehicles are provided with active inflation/deflation apparatuses. However, the inflation/deflation apparatus in the related art usually affect operation of hub bearings, and even affect safety of operation of vehicles.

### SUMMARY

In view of this, this application provides a new technical solution of a wheel-side inflation/deflation apparatus, an active tire pressure inflation/deflation system, and a vehicle. The new technical solution may avoid impact of an inflation/deflation apparatus on operation of a hub bearing.

The wheel-side inflation/deflation apparatus according to an embodiment of this application includes: an annular member, wherein the annular member is configured to be sleeved on a hub bearing and is fastened to an outer ring of the hub bearing, a first air path is formed in the annular member, and the first air path is configured to connect to an air source; and a rotation unit, wherein the rotation unit is sleeved on the annular member and is rotatable relative to the annular member, a rotary air chamber and a second air path are formed in the rotation unit, the rotary air chamber separately communicates with the first air path and the second air path, and the second air path is configured to communicate with a tire.

Optionally, the annular member is integrally formed with an outer ring of the hub bearing.

Optionally, the rotation unit includes: a seal assembly. The seal assembly is sleeved on the annular member and is in rotatable contact with the annular member. Along an axial direction of the annular member, two sides of the seal assembly separately abut against an outer wall of the annular member to form the rotary air chamber.

Optionally, a thickness of a portion of the seal assembly that is in rotatable contact with the annular member ranges from 0.5 mm to 1.5 mm.

Optionally, a friction-reducing agent is disposed at a portion of the annular member that is in contact with the seal assembly.

Optionally, the friction-reducing agent is a ceramic layer.

Optionally, the second air path is connected to the tire by using a wheel-side valve. The wheel-side valve is a pneumatic control valve. The wheel-side valve has an open state and a closed state. When the wheel-side valve is in the open state, the wheel-side inflation/deflation apparatus is capable of inflating/deflating the tire by using the wheel-side valve. When the inflation/deflation is completed, the wheel-side valve is capable of being switched to the closed state to achieve pressure maintenance on the tire.

Optionally, the wheel-side valve includes: a valve body, wherein the valve body is provided with a cavity, and a first air channel and a second air channel that communicate with the cavity; a piston, wherein the piston is movably disposed in the cavity, the piston having a first position and a second position, when the piston is at the first position, the first air channel communicates with the second air channel to cause the wheel-side valve to be in the open state, or when the piston is at the second position, the first air channel does not communicate with the second air channel to cause the wheel-side valve to be in the closed state; and an elastic member, wherein two ends of the elastic member respectively abut against the valve body and the piston to provide an elastic force for switching the piston from the first position to the second position.

Optionally, the piston is provided with an accommodation groove, and at least a part of the elastic member extends into the accommodation groove.

Optionally, the valve body includes a first cylinder and a second cylinder. An axis of the first cylinder and an axis of the second cylinder are perpendicular to each other. The first cylinder is provided with the first air channel. The second cylinder is provided with the cavity and the second air channel.

Optionally, the valve body includes a fastener. The fastener is provided with the second air channel. A convex portion is disposed at one end of the fastener that faces the piston, so that a driving air chamber is formed between the fastener and the piston. The first air channel communicates with the driving air chamber.

Optionally, a first channel, and a first vent port and a second vent port that communicate with the first channel are formed in the annular member. The first vent port is configured to communicate with the air source. The second vent port is configured to communicate with the rotary air chamber. The first vent port, the first channel, and the second vent port form the first air path.

Optionally, the first vent port is internally threaded for a threaded connection to a connection pipe. The connection pipe is configured to connect to the air source.

Optionally, the rotation unit is provided with a second channel, a third vent port connected to the rotary air chamber, and a fourth vent port configured to connect to the tire. The second air path includes the third vent port, the second channel, and the fourth vent port.

Optionally, the second air path further includes a first pipe section and a second pipe section. The first pipe section is connected to the fourth vent port. The first pipe section is configured to extend along an axial direction of the annular member. Extension directions of the second pipe section and the first pipe section are different. The first pipe section and the second pipe section are connected by using a pipe joint. The second pipe section communicates with the tire through the wheel-side valve.

Optionally, the fourth vent port is internally threaded, and the first pipe section is threadedly connected to the fourth vent port.

Optionally, a hub flange of the hub bearing is configured to be provided with a first through hole. A brake disc of the tire is configured to be provided with a second through hole. The first pipe section is configured to connect to the tire after passing through the first through hole and the second through hole.

Optionally, an outer diameter of the first pipe section is configured to be in contact with and fit an inner wall of at least one of the first through hole and the second through hole.

Optionally, a seal ring is disposed between the first pipe section and an inner wall of the fourth vent port.

Optionally, the wheel-side inflation/deflation apparatus further includes at least one fastening clip. The second pipe section is fastened to the wheel by using the fastening clip.

Optionally, the second pipe section is configured to be disposed on an inner side of a decorative plate of the wheel.

According to a second aspect of this application, an active tire pressure inflation/deflation system is provided, including an air source, an inflation valve, and the wheel-side inflation/deflation apparatus in the foregoing embodiments. The air source communicates with the first air path through the inflation valve.

Optionally, the active tire pressure inflation/deflation system further includes a plurality of control valves corresponding to a plurality of tires and a central air path. The central air path separately communicates with the first air path corresponding to the tire through the plurality of control valves. The inflation valve communicates with the central air path.

Optionally, the active tire pressure inflation/deflation system further includes a deflation valve. The deflation valve communicates with the central air path. The second air path communicates with the tire through a wheel-side valve. When deflation is needed, the tire, the wheel-side valve, the second air path, the rotary air chamber, the first air path, the control valve, and the deflation valve form a deflation path.

Optionally, the active tire pressure inflation/deflation system further includes a pressure maintaining valve. The pressure maintaining valve communicates with the central air path. The second air path communicates with the tire through the wheel-side valve. The wheel-side valve is a pneumatic control valve. The pressure maintaining valve is configured to: when the tire meets a preset tire pressure requirement, open the pressure maintaining valve to allow the wheel-side valve corresponding to the tire to be reset and closed for pressure maintenance on the tire.

According to a third aspect of this application, a vehicle is provided, including the active tire pressure inflation/deflation system in the foregoing embodiments.

According to this application, an annular member is provided. The annular member is sleeved on a hub bearing. A first air path is disposed in the annular member to be connected to an external air source. In addition, a rotation unit is sleeved in the annular member. A rotary air chamber and a second air path are disposed in the rotation unit. The rotary air chamber communicates with the first air path and the second air path. The second air path communicates with a tire. In a rotation process of the rotation unit, the rotary air chamber communicates with the first air path and the second air path to inflate/deflate the tire without significantly improving a structure of the hub bearing, so that the structure of the hub bearing is designed more simply, thereby facilitating processing and assembling the hub bearing, avoiding impact of the rotation unit on operation of the hub bearing, and ensuring that safety of operation of a vehicle is not affected.

Other features of this application and advantages thereof will become apparent from the following detailed description of example embodiments of this application with reference to the accompanying drawings.

### BRIEF DESCRIPTION OF DRAWINGS

FIG. 1 is a diagram of a structure of a wheel-side inflation/deflation apparatus according to an embodiment of this application;
FIG. 2 is a sectional view of a wheel-side inflation/deflation apparatus according to an embodiment of this application;
FIG. 3 is another sectional view of a wheel-side inflation/deflation apparatus according to an embodiment of this application;
FIG. 4 is a diagram of a structure of a rotation unit according to an embodiment of this application;
FIG. 5 is a diagram of a structure of a seal body according to an embodiment of this application;
FIG. 6 is a sectional view of a first pipe section according to an embodiment of this application;
FIG. 7 is a diagram of a joint of a wheel-side valve according to an embodiment of this application;
FIG. 8 is a sectional view of a piston of a wheel-side valve that is at a first position according to an embodiment of this application;
FIG. 9 is a sectional view of a piston of a wheel-side valve that is at a second position according to an embodiment of this application;
FIG. 10 is a sectional view of a wheel according to an embodiment of this application;
FIG. 11 is a block diagram of a structure of an active tire pressure inflation/deflation system according to an embodiment of this application; and
FIG. 12 is a diagram of a vehicle according to an embodiment of this application.

### Reference numerals:

1000: vehicle; 100: wheel-side inflation/deflation apparatus;
10: annular member; 11: first air path; 111: first channel; 112: first vent port; 113: second vent port;
20: rotation unit; 21: rotary air chamber; 22: second air path; 221: second channel; 222: third vent port; 223: fourth vent port;
30: seal assembly; 31: seal body;
41: first pipe section; 42: second pipe section; 43: seal ring; 44: pipe joint;
51: hub bearing; 511: outer ring; 52: hub flange; 53: first through hole; 54: bolt;
60: wheel-side valve; 61: valve body; 611: first cylinder; 612: first air channel; 613: second cylinder; 614: driving air chamber; 62: piston; 621: accommodation groove; 63: elastic member; 64: fastener; 641: second air channel; 642: convex portion;
71: tire; 72: brake disc; 73: fastening clip; 74: decorative plate; 75: wheel rim;
200: active tire pressure inflation/deflation system;
201: air source; 202: control valve; 203: central air path; 204: deflation valve; 205: pressure maintaining valve; 206: inflation valve.

### DESCRIPTION OF EMBODIMENTS

Various example embodiments of this application will now be described in detail with reference to the accompanying drawings. It should be noted that: Relative arrangements, numerical expressions, and numerical values of components and steps set forth in these embodiments do not limit the scope of this application unless otherwise specified.

The following description of at least one example embodiment is actually merely illustrative and is in no way intended to be any limitation on this application and its application or use.

Techniques, methods, and devices known to a person of ordinary skill in the related art may not be discussed in detail, but the techniques, methods, and devices should be considered as a part of the specification, as appropriate.

In all the examples shown and discussed herein, any specific value should be construed merely as an example and not as a limitation. Therefore, other examples of example embodiments may have different values.

It should be noted that: Like reference numerals and letters denote like items in the following accompanying drawings. Therefore, once a specific item is defined in an accompanying drawing, it is not necessary to discuss the item further in the following accompanying drawings.

In the specification and claims of this application, a feature limited by related terms "first" and "second" may explicitly or implicitly include one or more features. In the description of this application, unless otherwise specified, "a plurality of" means two or more. In addition, in the specification and claims, "and/or" indicates at least one of the connected objects, and the character "/" generally indicates an "or" relationship between the associated objects.

In the description of this application, it will be understood that, where involved, a directional or positional relationship indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like is based on a directional or positional relationship shown in the accompanying drawings, which is only for the purpose of facilitating the description of this application and simplifying the description, and is not intended to indicate or imply that an apparatus or element referred to must have a specific direction, be constructed and operated in a specific direction. Therefore, these terms should not be construed as limiting this application.

In the description of this application, it should be noted that, unless otherwise clearly specified and defined, related terms "mounting", "being connected to", and "connection" will be understood in a broad sense. For example, the connection may be a fixed connection, a detachable connection, or an integral connection; or may be a mechanical connection or an electrical connection; or may be a direct connection, an indirect connection through an intermediary medium, or an internal communication between two elements. For those of ordinary skill in the art, specific meanings of the foregoing terms in this application may be interpreted according to a specific condition.

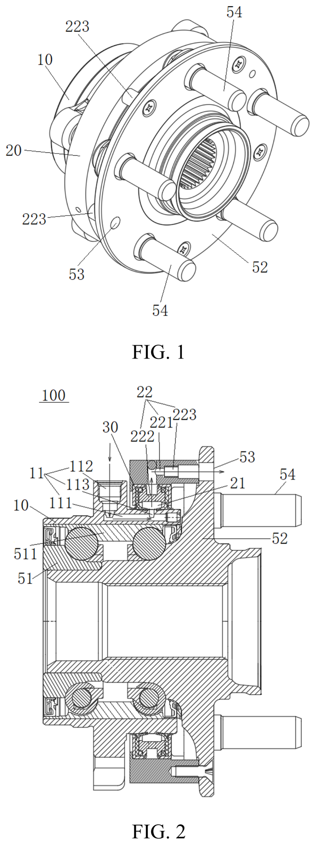

A wheel-side inflation/deflation apparatus 100 according to an embodiment of this application is described in detail below with reference to FIG. 1 to FIG. 12.

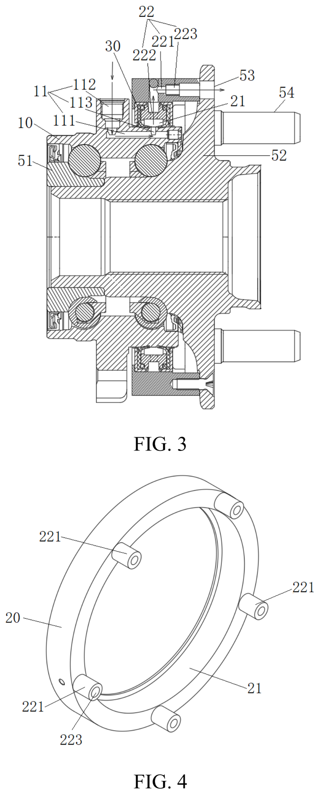

As shown in FIG. 1, FIG. 2, and FIG. 4, the wheel-side inflation/deflation apparatus 100 according to the embodiment of this application mainly includes an annular member 10 and a rotation unit 20. The annular member 10 is configured to be sleeved on a hub bearing 51, and the annular member 10 may be fastened to an outer ring 511 of the hub bearing 51. A first air path 11 is formed inside the annular member 10. The first air path 11 can be configured to connect to an air source 201, so that an external air source 201 guides gas into the first air path 11 of the annular member 10. The rotation unit 20 is sleeved in the annular member 10, and the rotation unit 20 is rotatable relative to the annular member 10. A rotary air chamber 21 and a second air path 22 are formed in the rotation unit 20. The rotary air chamber 21 separately communicates with the first air path 11 and the second air path 22. The second air path 22 can be configured to connect to a tire 71 to inflate/deflate the tire 71 (a gas flow direction is shown by arrow directions in FIG. 2 and FIG. 3).

It will be understood that the hub bearing 51 may include a hub flange 52, a rolling member, and an outer ring 511. The annular member 10 is sleeved on the hub bearing 51 and is fastened to the outer ring 511. The rotation unit 20 is sleeved on the annular member 10 and is provided with a rotary air chamber 21. The rotation unit 20 and the hub flange 52 may rotate synchronously with the tire. The annular member 10 is stationary relative to a vehicle body together with the outer ring 511. In this way, the air source 201 disposed in the vehicle body may communicate with the rotary air chamber 21 through the first air path 11 in the annular member 10, and then communicate with the tire 71 through the second air path 22 in the rotation unit 20, thereby inflating/deflating the tire 71.

In a related technology, a rotary air chamber formed by a seal assembly in the inflation/deflation apparatus is disposed between a bearing outer ring and a bearing inner ring, and the seal assembly is disposed between rolling members. In addition, a channel is disposed on each of the bearing inner ring and the bearing outer ring to communicate with the air source 201 and the tire. In this way, a structure of a bearing is complex, and further, the seal assembly is disposed between the bearing inner ring and the bearing outer ring. There are the following problems: First, it is difficult to dispose the seal assembly due to a space limitation; second, the seal assembly generates heat due to rotational friction, and the structure is not conducive to heat dissipation of the seal assembly; and third, the seal assembly is a quick-wear member, and is more easily worn when the seal assembly generates heat due to friction and heat is not easily dissipated. The seal assembly is located inside the bearing and is not easily replaced. If the bearing is replaced, a service life of the bearing is greatly shortened. If the bearing is not replaced in time, a worn seal assembly may be between the bearing outer ring and the bearing inner ring, thereby interfering with relative movement of the bearing inner ring, the rolling member, and the bearing outer ring. In this way, safety of operation of the vehicle is affected.

However, in this application, an annular member 10 is disposed. The annular member 10 is sleeved on a hub bearing 51, and a rotation unit 20 is sleeved on the annular member 10. A rotary air chamber 21 is disposed in the rotation unit 20, and the rotary air chamber 21 is located outside the entire hub bearing 51. It is only needed to use an existing hub bearing as the hub bearing 51, and the rotary air chamber 21 is easily disposed. Because the seal assembly 30 forming the rotary air chamber 21 is located outside the entire hub bearing 51, arrangement and heat dissipation of the seal assembly are not affected by the hub bearing 51, and wear of the seal assembly 30 caused by heat generated due to friction can be reduced. In addition, it is only needed to replace the seal assembly 30 in the rotation unit 20 after the seal assembly 30 is worn. The hub bearing 51 does not need to be disassembled, a service life of the hub bearing 51 is not affected, and no interference with operation of the hub bearing 51 due to fracture fragments of the seal assembly 30 or other factors occurs. Impact of arrangement of the inflation/deflation apparatus on operation of the hub bearing 51 is avoided, thereby preventing safe operation of the vehicle from being affected, and facilitating mass production and application of the inflation/deflation apparatus of this application in the vehicles.

According to one embodiment of this application, as shown in FIG. 3, the annular member 10 is integrally formed with the outer ring 511 of the hub bearing 51. That is, the annular member 10 may be directly integrally formed with the hub bearing 51. The annular member 10 and the hub bearing 51 are connected as an integral part, thereby reducing difficulty of disposing the annular member 10, and ensuring a more stable connection between the annular member 10 and the hub bearing 51. In addition, a structure of the hub bearing 51 does not need to be significantly improved, so that the structure of the hub bearing 51 is designed more simply, thereby facilitating processing and assembling the hub bearing 51.

According to an embodiment of this application, with reference to FIG. 2 and FIG. 3, the rotation unit 20 includes a seal assembly 30. The seal assembly 30 is sleeved on the annular member 10, and the seal assembly 30 is in rotatable contact with the annular member 10. Along an axial direction of the annular member 10, two sides of the seal assembly 30 can separately abut against an outer wall of the annular member 10 to form the rotary air chamber 21.

The seal assembly 30 is sleeved on the annular member 10. In addition, two sides along the axial direction of the annular member 10 separately abut against the outer wall of the annular member 10 to form the rotary air chamber 21, so that the seal assembly 30 is easily disposed, and heat is easily dissipated.

It should be noted that, as shown in FIG. 2 to FIG. 5, the seal assembly 30 mainly includes two seal bodies 31. The two seal bodies 31 are disposed opposite to each other in the rotation unit 20. A cross section of the seal body 31 is in a herringbone shape. The seal body 31 may be connected to the rotation unit 20 in a sealing manner, and may form a rotatable seal together with the annular member 10. The seal body 31 may be made of a material that is resistant to high temperature and wear. An inner side of the seal body 31 is used to seal gas, and an outer side of the seal body 31 may be waterproof and dustproof. The cross section of the seal body 31 is disposed in the herringbone shape, thereby further improving sealing performance between the seal assembly 30 and the annular member 10.

The seal assembly 30 may be in an interference fit with the rotation unit 20.

According to one embodiment of this application, a plurality of bolts 54 are disposed on the hub flange 52. One end of each bolt 54 abuts against the rotation unit 20 to limit the rotation unit 20 and the seal assembly 30 in an axial direction. An end face of the bolt 54 that faces the rotation unit 20 is milled into a flat surface.

That is, as shown in FIG. 1 to FIG. 3, a plurality of bolts 54 are disposed on the hub flange 52. One end of each bolt 54 abuts against the rotation unit 20. An end face of each bolt 54 may be used as a limiting surface, thereby achieving limitation on the rotation unit 20 and the seal assembly 30 in the axial direction. The end face of the bolt 54 that faces the rotation unit 20 may be milled into a flat surface, thereby improving axial accuracy and radial accuracy of mounting.

In some specific implementations of this application, a thickness of a portion of the seal assembly 30 that is in rotatable contact with the annular member 10 approximately ranges from 0.5 mm to 1.5 mm, thereby ensuring that a good seal may be formed between the seal assembly 30 and the annular member 10, and also ensuring a service life of the seal assembly 30.

In some specific implementations of this application, a friction-reducing agent may be disposed at a portion of the annular member 10 that is in contact with the seal assembly 30. The friction-reducing agent is disposed, so that rotational resistance of the seal assembly 30 may be reduced, wear between the seal assembly 30 and the annular member 10 may be reduced, and service lives of the seal assembly 30 and the annular member 10 may be prolonged. The friction-reducing agent may be made of a material that is resistant to high temperature and wear. Optionally, the friction-reducing agent may be a ceramic layer made of chromium oxide to reduce wear between the seal assembly 30 and the annular member 10, and prolong the service lives of the seal assembly 30 and the annular member 10.

According to an embodiment of this application, as shown in FIG. 2, the second air path 22 may be connected to the tire 71 by using a wheel-side valve 60. The wheel-side valve 60 may be a pneumatic control valve. The wheel-side valve 60 has an open state and a closed state. When the wheel-side valve 60 is in the open state, the wheel-side inflation/deflation apparatus 100 is capable of inflating/deflating the tire 71 by using the wheel-side valve 60. When the inflation/deflation is completed, the wheel-side valve 60 is capable of being switched to the closed state to achieve pressure maintenance on the tire 71. A problem of arranging wire harnesses of an electrical connection and a signal connection may be solved by using the wheel-side valve 60 of the pneumatic control valve.

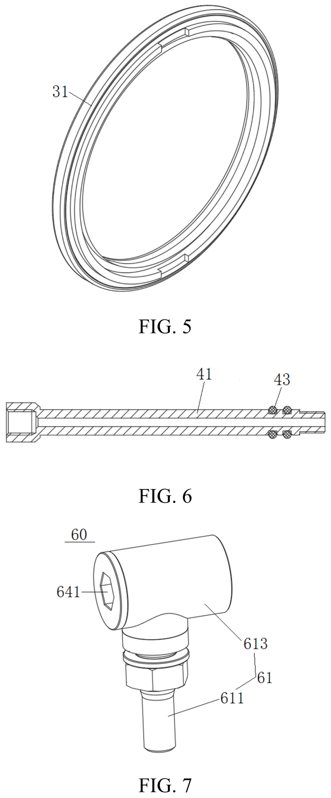

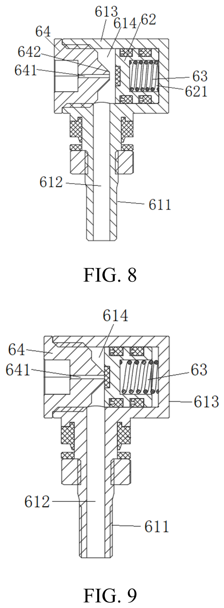

According to an embodiment of this application, as shown in FIG. 7 to FIG. 9, the wheel-side valve 60 mainly includes a valve body 61, a piston 62, and an elastic member 63. The valve body 61 is provided with a cavity, a first air channel 612, and a second air channel 641. The first air channel 612 and the second air channel 641 can separately communicate with the cavity. A piston 62 is movably disposed within the cavity. The piston 62 has a first position and a second position. When the piston 62 is at the first position, as shown in FIG. 8, the first air channel 612 communicates with the second air channel 641 to cause the wheel-side valve 60 to be in the open state. When the piston 62 is at the second position, with reference to FIG. 9, the first air channel 612 does not communicate with the second air channel 641 to cause the wheel-side valve 60 to be in the closed state. The piston 62 moves at the first position and the second position, airflow may be turned on or off to facilitate controlling inflation/deflation of the tire 71. Two ends of the elastic member 63 respectively abut against the valve body 61 and the piston 62 to provide an elastic force for switching the piston 62 from the first position to the second position, and ensure that the piston 62 can be switched between the first position and the second position.

The piston 62 has two positions, so that the wheel-side valve 60 has an open state and a closed state, thereby improving reliability of operation of the wheel-side valve 60. In addition, the elastic member 63 is disposed, so that the wheel-side valve 60 is a normally closed pneumatic control valve, thereby ensuring that a tire pressure of the tire 71 is not easily leaked.

According to an embodiment of this application, with reference to FIG. 8, the piston 62 is provided with an accommodation groove 621. At least a part of the elastic member 63 extends into the accommodation groove 621, so that the piston 62 is lightweight. In this way, the wheel-side valve 60 is lightweight, thereby reducing impact of arrangement of the wheel-side valve 60 on dynamic balance of the tire 71.

According to an embodiment of this application, with reference to FIG. 7 to FIG. 9, the valve body 61 includes a first cylinder 611 and a second cylinder 613. An axis of the first cylinder 611 and an axis of the second cylinder 613 are perpendicular to each other. A first air channel 612 is disposed in the first cylinder 611. A cavity and a second air channel 641 are disposed in the second cylinder 613. The first cylinder 611 and the second cylinder 613 construct the valve body 61 into a T-shaped structure, thereby helping the wheel-side valve 60 communicate with the second air path 22 and the tire 71, facilitating cooperation with the wheel to limit the wheel-side valve 60, and preventing the wheel-side valve 60 from rotating and loosening in a driving process of the vehicle 1000.

According to an embodiment of this application, with reference to FIG. 8 and FIG. 9, the valve body 61 includes a fastener 64. The fastener 64 may be disposed as a deflation plug. The second air channel 641 is disposed in the fastener 64. A convex portion 642 is disposed at an end of the fastener 64 that faces the piston 62, so that a driving air chamber 614 is formed between the fastener 64 and the piston 62. The first air channel 612 communicates with the driving air chamber 614. The driving air chamber 614 is inflated, so that the piston 62 can move from the second position to the first position. Then, the elastic member 63 allows the piston 62 to move from the first position to the second position. This structure facilitates miniaturization of the wheel-side valve 60.

According to an embodiment of this application, as shown in FIG. 2 and FIG. 3, a first channel 111, and a first vent port 112 and a second vent port 113 that communicate with the first channel 111 are formed in the annular member 10. The first vent port 112 is configured to communicate with the air source 201. The second vent port 113 is configured to communicate with the rotary air chamber 21. The first vent port 112, the first channel 111, and the second vent port 113 form the first air path 11 to guide airflow from the air source 201 to the rotation unit 20.

The first vent port 112 and the second vent port 113 may be through holes penetrating through the outer wall of the annular member 10, thereby facilitating arrangement of the first vent port 112 and the second vent port 113. In addition, a connection pipe between the first vent port 112 and the air source 201 may be arranged outside the annular member 10 along a radial direction, thereby facilitating communication between the second vent port 113 and the rotary air chamber 21 sleeved in the rotation unit 20 of the annular member 10, and easily disposing the wheel-side inflation/deflation apparatus 100 of this application. The first channel 111 may extend along the axial direction of the annular member 10. An end of the first channel 111 may be sealed by using a steel ball. In this way, the first channel 111 is disposed easily.

Optionally, the annular member is internally threaded at a position of the first vent port 112 to be threadedly connected to the connection pipe. A threaded connection manner is simple, and disassembly is convenient.

It will be understood that the annular member 10 may extend outward from a cylindrical boss along a radial direction, and the boss is internally threaded, thereby further facilitating threaded pipe connection. The connection pipe may be provided with a quick connector with a good seal. The quick connector is threadedly connected to the boss, and has a good sealing effect.

According to an embodiment of this application, the rotation unit 20 is provided with a second channel 221, a third vent port 222 connected to the rotary air chamber 21, and a fourth vent port 223 configured to connect to the tire 71. The second air path 22 includes the third vent port 222, the second channel 221, and the fourth vent port 223, thereby transmitting airflow to the tire 71, and inflating/deflating the tire 71.

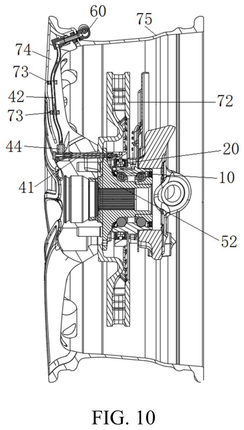

According to an embodiment of this application, with reference to FIG. 10, the second air path 22 further includes a first pipe section 41 and a second pipe section 42. The first pipe section 41 is connected to the fourth vent port 223. The first pipe section 41 is configured to extend along an axial direction of the annular member 10. Extension directions of the second pipe section 42 and the first pipe section 41 are different. The first pipe section 41 and the second pipe section 42 are connected by using a pipe joint 44. The second pipe section 42 communicates with the tire 71 through the wheel-side valve 60 to inflate/deflate the tire 71. A structure is simple, and connection is convenient.

According to an embodiment of this application, the fourth vent port 223 is internally threaded, that is, the rotation unit 20 is internally threaded at a position of the fourth vent port 223. The first pipe section 41 is threadedly connected to the fourth vent port 223, thereby helping the first pipe section 41 be fastened to the fourth vent port 223.

It will be understood that, as shown in FIG. 10, the first pipe section 41 is a rigid pipe, and an external thread is disposed on a part of an outer wall of the first pipe section 41. The first pipe section 41 can pass through a brake disc 72, a flange plate, and the like. In addition, an end of the first pipe section 41 that is away from the fourth vent port 223 can be rotated, so that the first pipe section 41 is threadedly connected to the fourth vent port 223, and connection of the first pipe section 41 is convenient. In addition, the first pipe section 41 is a rigid pipe, thereby preventing the first pipe section from deforming due to a centrifugal force in a rotation process or from interfering with other parts of the wheel.

According to one embodiment of this application, with reference to FIG. 1, FIG. 2, and FIG. 10, the hub flange 52 of the hub bearing 51 is configured to be provided with a first through hole 53. The brake disc 72 of the tire 71 is configured to be provided with a second through hole. The first pipe section 41 is configured to connect to the tire 71 after passing through the first through hole 53 and the second through hole, thereby achieving connection of the air path. The first through hole 53 and the second through hole are disposed, thereby facilitating arrangement of the first pipe section 41, and facilitating weight reduction of the hub flange 52 and the brake disc 72.

In some specific implementations of this application, an outer diameter of the first pipe section 41 is configured to be in contact with and fit an inner wall of at least one of the first through hole 53 and the second through hole, thereby turning on airflow. The outer diameter of the first pipe section 41 is in contact with and fits the inner wall of at least one of the first through hole 53 and the second through hole, so that the first pipe section 41 may be limited, thereby further preventing the first pipe section from deforming in a rotation process or from interfering with other parts of the wheel.

With reference to FIG. 6, a seal ring 43 is disposed between the first pipe section 41 and the inner wall of the fourth vent port 223, thereby improving sealing performance of connection between the first pipe section 41 and the fourth vent port 223, and improving airflow conduction efficiency.

According to an embodiment of this application, with reference to FIG. 10, the wheel-side inflation/deflation apparatus 100 further includes at least one fastening clip 73. The second pipe section 42 may be fastened to the wheel by using the fastening clip 73, thereby ensuring that the second pipe section 42 does not deform due to a centrifugal force in a rotation process, which would cause interference with other parts of the wheel. It will be understood that the wheel includes a hub bearing 51, a wheel rim 75, a spoke, a tire 71, and the like. The tire 71 is sleeved on a periphery of the wheel rim 75. The second pipe section 42 may be fastened to different portions of the wheel by using a fastening clip 73. It is only needed to fasten the second pipe section 42 at a plurality of points.

According to one embodiment of this application, the second pipe section 42 is configured to be disposed on an inner side of a decorative plate 74 of the wheel to ensure an aesthetic appearance of a structure.

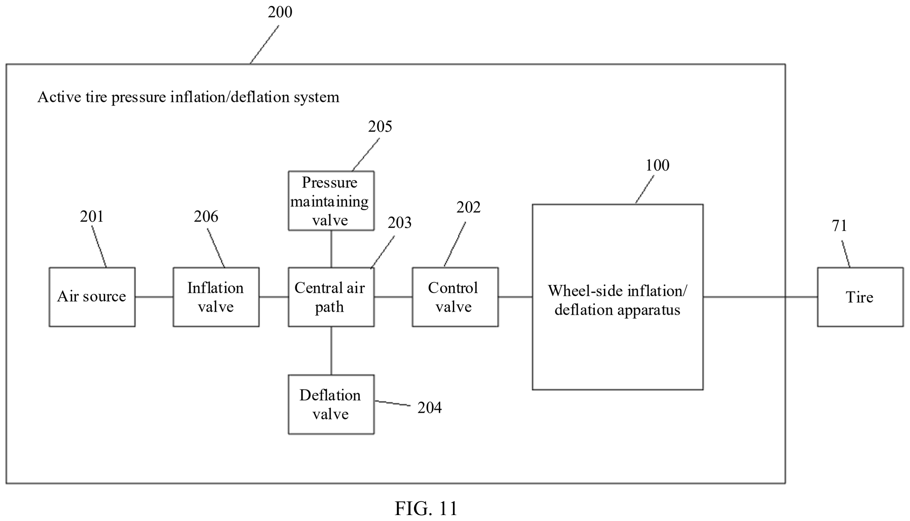

According to a second aspect of this application, with reference to FIG. 11, an active tire pressure inflation/deflation system 200 is provided, including an air source 201, an inflation valve 206, and the wheel-side inflation/deflation apparatus 100 in the foregoing embodiments. The air source 201 communicates with a first air path 11 through the inflation valve 206. Gas is guided into the wheel-side inflation/deflation apparatus 100 to inflate a tire 71 without stopping the vehicle. The active tire pressure inflation/deflation system 200 of this application has all beneficial effects of the wheel-side inflation/deflation apparatus 100 in the embodiment of the first aspect of this application. Details are not described herein again.

According to an embodiment of this application, as shown in FIG. 11, the active tire pressure inflation/deflation system 200 further includes a plurality of control valves 202 corresponding to a plurality of tires 71 and a central air path 203. The central air path 203 may separately communicate with the first air path 11 corresponding to the tire 71 through the plurality of control valves 202. The inflation valve 206 communicates with the central air path 203, thereby achieving conduction between gas sent from the air source 201 and the wheel-side inflation/deflation apparatus 100, and automatically inflating the tire 71.

It should be noted that FIG. 11 shows only one control valve 202. The central air path 203 communicates with a plurality of tires through a plurality of parallel branches, and the plurality of control valves 202 are separately disposed on a corresponding branch.

The plurality of control valves 202 control connection or disconnection between the plurality of tires and the central air path 203, so that one inflation valve 206 inflates the plurality of tires. In addition, each of the control valve 202 and the inflation valve 206 may be a two-position two-way solenoid valve. Compared with a two-position three-way solenoid valve used in a related technology, the two-position two-way solenoid valve has higher reliability and a smaller volume, thereby facilitating mass production and application in small vehicles 1000, such as passenger vehicles.

According to an embodiment of this application, as shown in FIG. 11, the active tire pressure inflation/deflation system 200 further includes a deflation valve 204. The deflation valve 204 communicates with the central air path 203. The second air path 22 communicates with the tire 71 through the wheel-side valve 60. When deflation is needed, the tire 71, the wheel-side valve 60, the second air path 22, the rotary air chamber 21, the first air path 11, the control valve 202, and the deflation valve 204 form a deflation path, thereby automatically deflating the tire 71. The deflation valve 204 communicating with the central air path 203 may deflate the plurality of tires 71. In this way, an air path section from the tire to the central air path 203 may be shared during inflation/deflation, so that the air path is simple.

According to an embodiment of this application, with reference to FIG. 11, the active tire pressure inflation/deflation system 200 further includes a pressure maintaining valve 205. The pressure maintaining valve 205 communicates with the central air path 203. The second air path 22 communicates with the tire 71 through the wheel-side valve 60. The wheel-side valve 60 is a pneumatic control valve. The pressure maintaining valve 205 is configured to: when the tire 71 meets a preset tire pressure requirement, open the pressure maintaining valve 205 to allow the wheel-side valve 60 corresponding to the tire 71 to be reset and closed, thereby achieving pressure maintenance on the tire 71, and meeting a driving requirement of the vehicle 1000.

It will be understood that two ends of the pressure maintaining valve 205 respectively communicate with the central air path 203 and an atmosphere. After the inflation/deflation is completed, the pressure maintaining valve 205 is opened to discharge gas in the air path in time, so that the wheel-side valve 60 is reset and closed. In addition, impact of the presence of highpressure gas in the air path on a service life of an air path pipe is reduced.

The active tire pressure inflation/deflation system 200 of this application may inflate/deflate the tire 71 without stopping the vehicle, thereby improving maneuverability and user experience of the vehicle 1000.

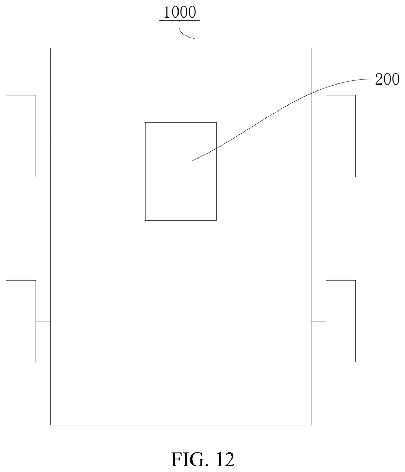

According to a third aspect of this application, with reference to FIG. 12, a vehicle 1000 is provided, including the active tire pressure inflation/deflation system 200 in the foregoing embodiments. Because the active tire pressure inflation/deflation system 200 according to the embodiment of this application has the foregoing technical effect, the vehicle according to the embodiment of this application should also have a corresponding technical effect, that is, the vehicle of this application uses the active tire pressure inflation/deflation system 200, thereby achieving operations of inflating/deflating the tire 71 without stopping the vehicle and achieving pressure maintenance on the tire. Maneuverability and user experience of the vehicle are improved. In addition, a structure of the hub bearing 51 does not need to be significantly improved, so that the structure of the hub bearing 51 is designed more simply, thereby facilitating processing and assembling the hub bearing 51, avoiding impact of the wheel-side inflation/deflation apparatus 100 on operation of the hub bearing 51, and ensuring that safety of operation of the vehicle is not affected.

Certainly, for those skilled in the art, other structures and working principles of the vehicle will be understood and implemented. Details are not described in this application again.

Although some specific embodiments of this application have been described in detail by using examples, those skilled in the art should understand that the foregoing examples are merely for description, but are not intended to limit the scope of this application. Those skilled in the art should understand that modifications may be made to the foregoing embodiments without departing from the scope and spirit of this application. The scope of this application is defined by the appended claims.

## Claims

1. A wheel-side inflation/deflation apparatus, comprising:
an annular member, wherein the annular member is configured to be sleeved on a hub bearing and is fastened to an outer ring of the hub bearing, a first air path is formed in the annular member, and the first air path is configured to connect to an air source; and
a rotation unit, wherein the rotation unit is sleeved on the annular member and is rotatable relative to the annular member, a rotary air chamber and a second air path are formed in the rotation unit, the rotary air chamber separately communicates with the first air path and the second air path, and the second air path is configured to communicate with a tire.

2. The wheel-side inflation/deflation apparatus according to claim 1, wherein the annular member is integrally formed with an outer ring of the hub bearing.

3. The wheel-side inflation/deflation apparatus according to claim 1 or 2, wherein the rotation unit comprises:
a seal assembly, wherein the seal assembly is sleeved on the annular member and is in rotatable contact with the annular member, and along an axial direction of the annular member, two sides of the seal assembly separately abut against an outer wall of the annular member to form the rotary air chamber.

4. The wheel-side inflation/deflation apparatus according to claim 3, wherein a thickness of a portion of the seal assembly that is in rotatable contact with the annular member ranges from 0.5 mm to 1.5 mm.

5. The wheel-side inflation/deflation apparatus according to claim 3 or 4, wherein a friction-reducing agent is disposed at a portion of the annular member that is in contact with the seal assembly.

6. The wheel-side inflation/deflation apparatus according to claim 5, wherein the friction-reducing agent is a ceramic layer.

7. The wheel-side inflation/deflation apparatus according to any one of claims 1 to 6, wherein the second air path is connected to the tire by using a wheel-side valve, the wheel-side valve is a pneumatic control valve, the wheel-side valve has an open state and a closed state, when the wheel-side valve is in the open state, the wheel-side inflation/deflation apparatus is capable of inflating/deflating the tire by using the wheel-side valve, and when the inflation/deflation is completed, the wheel-side valve is capable of being switched to the closed state to achieve pressure maintenance on the tire.

8. The wheel-side inflation/deflation apparatus according to claim 7, wherein the wheel-side valve comprises:
a valve body, wherein the valve body is provided with a cavity, and a first air channel and a second air channel that communicate with the cavity;
a piston, wherein the piston is movably disposed in the cavity, the piston has a first position and a second position, when the piston is at the first position, the first air channel communicates with the second air channel to cause the wheel-side valve to be in the open state, or when the piston is at the second position, the first air channel does not communicate with the second air channel to cause the wheel-side valve to be in the closed state; and
an elastic member, wherein two ends of the elastic member respectively abut against the valve body and the piston to provide an elastic force for switching the piston from the first position to the second position.

9. The wheel-side inflation/deflation apparatus according to claim 8, wherein the piston is provided with an accommodation groove, and at least a part of the elastic member extends into the accommodation groove.

10. The wheel-side inflation/deflation apparatus according to claim 8 or 9, wherein the valve body comprises a first cylinder and a second cylinder, an axis of the first cylinder and an axis of the second cylinder are perpendicular to each other, the first cylinder is provided with the first air channel, and the second cylinder is provided with the cavity and the second air channel.

11. The wheel-side inflation/deflation apparatus according to any one of claims 8 to 10, wherein the valve body comprises a fastener, the fastener is provided with the second air channel, a convex portion is disposed at one end of the fastener that faces the piston, so that a driving air chamber is formed between the fastener and the piston, and the first air channel communicates with the driving air chamber.

12. The wheel-side inflation/deflation apparatus according to any one of claims 1 to 11, wherein a first channel, and a first vent port and a second vent port that communicate with the first channel are formed in the annular member, the first vent port is configured to communicate with the air source, the second vent port is configured to communicate with the rotary air chamber, and the first vent port, the first channel, and the second vent port form the first air path.

13. The wheel-side inflation/deflation apparatus according to claim 12, wherein the first vent port is internally threaded for a threaded connection to a connection pipe, and the connection pipe is configured to connect to the air source.

14. The wheel-side inflation/deflation apparatus according to any one of claims 1 to 13, wherein the rotation unit is provided with a second channel, a third vent port connected to the rotary air chamber, and a fourth vent port configured to connect to the tire, and the second air path comprises the third vent port, the second channel, and the fourth vent port.

15. The wheel-side inflation/deflation apparatus according to claim 14, wherein the second air path further comprises a first pipe section and a second pipe section, the first pipe section is connected to the fourth vent port, the first pipe section is configured to extend along an axial direction of the annular member, extension directions of the second pipe section and the first pipe section are different, the first pipe section and the second pipe section are connected by using a pipe joint, and the second pipe section communicates with the tire through the wheel-side valve.

16. The wheel-side inflation/deflation apparatus according to claim 15, wherein the fourth vent port is internally threaded, and the first pipe section is threadedly connected to the fourth vent port.

17. The wheel-side inflation/deflation apparatus according to claim 15 or 16, wherein a hub flange of the hub bearing is configured to be provided with a first through hole, a brake disc of the tire is configured to be provided with a second through hole, and the first pipe section is configured to connect to the tire after passing through the first through hole and the second through hole.

18. The wheel-side inflation/deflation apparatus according to claim 17, wherein an outer diameter of the first pipe section is configured to be in contact with and fit an inner wall of at least one of the first through hole and the second through hole.

19. The wheel-side inflation/deflation apparatus according to any one of claims 15 to 18, wherein a seal ring is disposed between the first pipe section and an inner wall of the fourth vent port.

20. The wheel-side inflation/deflation apparatus according to any one of claims 15 to 19, further comprising at least one fastening clip, and the second pipe section is fastened to the wheel by using the fastening clip.

21. The wheel-side inflation/deflation apparatus according to any one of claims 15 to 20, wherein the second pipe section is configured to be disposed on an inner side of a decorative plate of the wheel.

22. An active tire pressure inflation/deflation system, comprising an air source, an inflation valve, and the wheel-side inflation/deflation apparatus according to any one of claims 1 to 21, wherein the air source communicates with the first air path through the inflation valve.

23. The active tire pressure inflation/deflation system according to claim 22, further comprising a plurality of control valves corresponding to a plurality of tires and a central air path, wherein the central air path separately communicates with the first air path corresponding to the tire through the plurality of control valves, and the inflation valve communicates with the central air path.

24. The active tire pressure inflation/deflation system according to claim 23, further comprising a deflation valve, wherein the deflation valve communicates with the central air path, the second air path communicates with the tire through a wheel-side valve, and when deflation is needed, the tire, the wheel-side valve, the second air path, the rotary air chamber, the first air path, the control valve, and the deflation valve form a deflation path.

25. The active tire pressure inflation/deflation system according to claim 23 or 24, further comprising a pressure maintaining valve, wherein the pressure maintaining valve communicates with the central air path, the second air path communicates with the tire through the wheel-side valve, the wheel-side valve is a pneumatic control valve, and the pressure maintaining valve is configured to: when the tire meets a preset tire pressure requirement, open the pressure maintaining valve to allow the wheel-side valve corresponding to the tire to be reset and closed for pressure maintenance on the tire.

26. A vehicle, comprising the active tire pressure inflation/deflation system according to any one of claims 22 to 25.
